(19) Europäisches Patentamt
European Patent Office
Office européen des brevets

(11) **EP 4 775 559 A1**

(12) **EUROPEAN PATENT APPLICATION**
published in accordance with Art. 153(4) EPC

(43) Date of publication:
**15.07.2026 Bulletin 2026/29**

(21) Application number: **24862900.8**

(22) Date of filing: **06.09.2024**

(51) International Patent Classification (IPC):
*C04B 35/596* (2006.01)     *C04B 35/117* (2006.01)
*C04B 35/645* (2006.01)     *F16C 19/52* (2006.01)
*F16C 33/32* (2006.01)

(52) Cooperative Patent Classification (CPC):
**C04B 35/117; C04B 35/584; C04B 35/645;
F16C 19/52; F16C 33/32**

(86) International application number:
**PCT/JP2024/032006**

(87) International publication number:
**WO 2025/053251 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.09.2023 JP 2023145269**

(71) Applicant: **Niterra Materials Co., Ltd.
Yokohama-shi, Kanagawa 235-0032 (JP)**

(72) Inventors:
• **FUNAKI, Kai**
**Yokohama-shi, Kanagawa 235-0032 (JP)**
• **TONAI, Hiroki**
**Yokohama-shi, Kanagawa 235-0032 (JP)**

(74) Representative: **Henkel & Partner mbB
Patentanwaltskanzlei, Rechtsanwaltskanzlei
Maximiliansplatz 21
80333 München (DE)**

(54) **CERAMIC SINTERED BODY, ABRASION RESISTANT MEMBER, AND METHOD FOR PRODUCING CERAMIC SINTERED BODY**

(57)     In an arbitrarily defined cross-section passing through the center of gravity of a ceramic sintered body according to an embodiment of the present invention, when a portion on the surface side is defined as a surface part and a portion centered at the center of gravity and existing within a radius of 1 mm is defined as a center-of-gravity part, and when an X-Ray Diffractometers (XRD) analysis is performed on the surface part and the center-of-gravity part, detection positions of the top four peaks in a descending order of the intensities of peaks detected within a diffraction angle range of 10-60° are the same between the surface part and the center-of-gravity part within a range of $\pm 0.5°$. The surface part is suitably set at a portion 0.5-1.0 mm from the surface.

1A (1)

FIG. 1

EP 4 775 559 A1

**Description**

**TECHNICAL FIELD**

An embodiment of the preset invention relates to a ceramic sintered compact, a wear-resistant member, and a method of manufacturing a ceramic sintered compact.

**BACKGROUND ART**

Ceramic sintered compacts are lightweight, have a high hardness, and exhibit excellent wear resistance and corrosion resistance and have a low thermal expansion coefficient. Owing to such properties, they have come to be widely used as components for precision equipment. Examples of the ceramic sintered compacts include silicon nitride sintered compacts, aluminum nitride sintered compacts, aluminum oxide sintered compacts, and zirconium oxide sintered compacts. In terms of a high hardness and an excellent wear resistance, ceramic sintered compacts are suitably used as wear-resistant members constituting bearings and the like. In particular, silicon nitride sintered compacts, which have a high hardness and an excellent wear resistance among ceramic sintered compacts, are suitably used as wear-resistant members constituting bearings and the like.

For example, Japanese Patent No. 5732037 (Patent Document 1) discloses a silicon nitride sintered compact in which a crystalline compound in a grain boundary phase is controlled. The silicon nitride sintered compact according to Patent Document 1 is reduced in local variations in Vickers hardness and fracture toughness of a single silicon nitride sintered compact.

**PRIOR ART DOCUMENTS**

**PATENT DOCUMENT**

Patent Document 1: Japanese Patent No. 5732037

**SUMMARY OF THE INVENTION**

**PROBLEMS TO BE SOLVED BY THE INVENTION**

In Patent Document 1, variations in Vickers hardness and fracture toughness of a silicon nitride sintered compact are reduced to improve a wear resistance of a bearing ball made of the silicon nitride sintered compact. However, a plurality of silicon nitride sintered compacts vary in properties such as Vickers hardness. Investigation into the cause of this has revealed that a cooling step after an HIP (Hot Isostatic Pressing) treatment is responsible. To produce a bearing ball, the HIP treatment is performed after a primary sintering step. The HIP treatment is a type of sintering method in which a high temperature and a high pressure are to be applied. During the HIP treatment, a plurality of ceramic sintered compacts are treated at a time. In some cases, several hundred to several thousand ceramic sintered compacts are subjected to the HIP treatment at a time. It has been found that a control of a cooling rate, in particular, a lower limit of the cooling rate, after the HIP treatment, is responsible for a variation in properties among individual ceramic sintered compacts. An embodiment is intended to address such a problem.

**MEANS FOR SOLVING THE PROBLEMS**

A ceramic sintered compact according to an embodiment includes a surface portion that is a portion on a surface side in a cross section passing through a centroid; and a centroidal portion that is a portion within a radius of 1 mm centered about the centroid in the cross section. In the ceramic sintered compact, when the surface portion and the centroidal portion are subjected to an XRD (X-Ray Diffractometers) analysis, detection positions of top four peaks in a descending order of peak strength match within $\pm 0.5°$ between the surface portion and the centroidal portion, the top four peaks being detected within a range of a diffraction angle from 10° to 60°.

**BRIEF DESCRIPTION OF THE DRAWINGS**

[FIG. 1] FIG. 1 is an appearance view illustrating an example of a spherical ceramic sintered compact among ceramic sintered compacts according to an embodiment.

[FIG. 2] FIG. 2 is a diagram illustrating an example of the spherical ceramic sintered compact among the ceramic sintered compacts according to the embodiment.

[FIG. 3] FIG. 3 is a diagram illustrating an example of a rectangular ceramic sintered compact among the ceramic sintered compacts according to the embodiment.

[FIG. 4] FIG. 4 is a diagram illustrating an example of a bearing including a bearing ball made of the spherical ceramic sintered compact among the ceramic sintered compacts according to the embodiment.

## DESCRIPTION OF EMBODIMENTS

A ceramic sintered compact according to an embodiment includes a surface portion that is a portion on a surface side in a cross section passing through a centroid; and a centroidal portion that is a portion within a radius of 1 mm centered about the centroid in the cross section. In the ceramic sintered compact, when the surface portion and the centroidal portion are subjected to an XRD analysis, detection positions of top four peaks in a descending order of peak strength match within ±0.5° between the surface portion and the centroidal portion, the top four peaks being detected within a range of a diffraction angle from 10° to 60°.

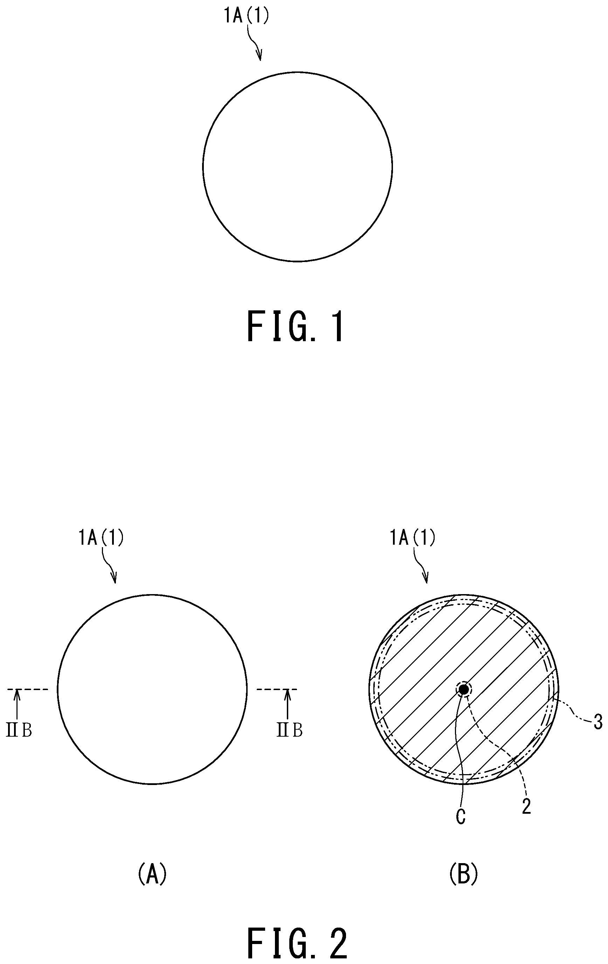

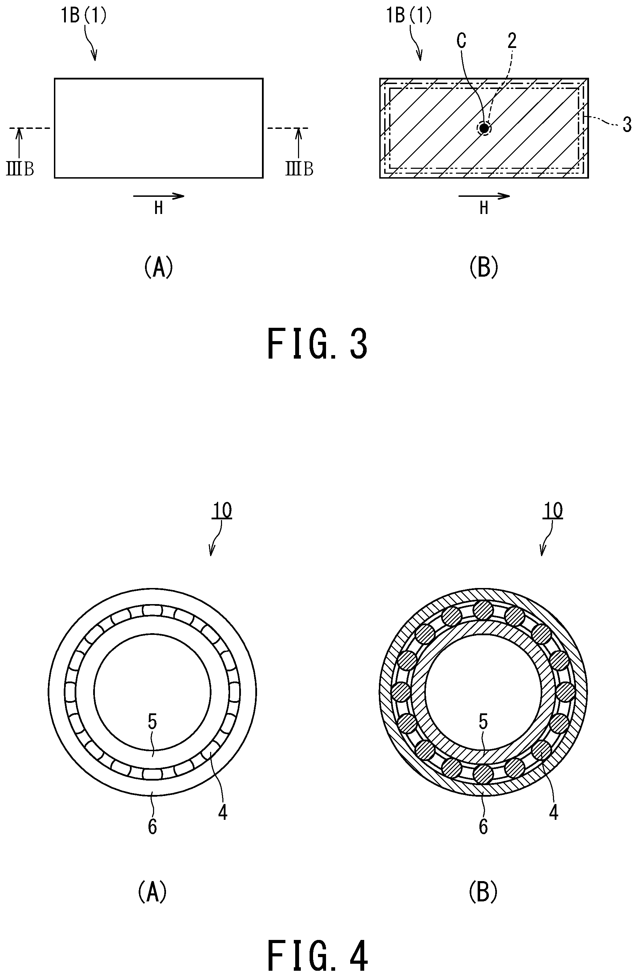

FIG. 1, FIG. 2, and FIG. 3 illustrate examples of ceramic sintered compacts according to an embodiment. In the Figures, a reference numeral 1 represents a ceramic sintered compact, a reference numeral 1A represents a spherical ceramic sintered compact among the ceramic sintered compacts 1, a reference numeral 1B represents a rectangular ceramic sintered compact among the ceramic sintered compacts 1, a reference numeral 2 represents a centroidal portion, and a reference numeral 3 represents a surface portion. FIG. 1 and FIG. 2 illustrate the spherical ceramic sintered compact 1A among the ceramic sintered compacts 1. Division (A) of FIG. 2 is an appearance view of the spherical ceramic sintered compact 1A. Division (B) of FIG. 2 is a cross-sectional view along IIB-IIB in division (A) of FIG. 2. FIG. 3 illustrates the rectangular ceramic sintered compact 1B among the ceramic sintered compacts 1. Division (A) of FIG. 3 is an appearance view of the rectangular ceramic sintered compact 1B. Division (B) of FIG. 3 is a cross-sectional view along IIIB-IIIB in division (A) of FIG. 3. The shapes of the ceramic sintered compacts 1 are not limited to such shapes and may include a columnar shape, a square shape, and the like. Moreover, the ceramic sintered compacts 1 may be in a shape of a component such as a cam roller or a friction stir welding tool. Division (A) of FIG. 4 is a front view of a bearing 10 including a bearing ball 4. Division (B) of FIG. 4 is a transverse cross-sectional view of the bearing 10 including the bearing ball 4.

Here, unless otherwise noted, the ceramic sintered compact 1 is described using the spherical ceramic sintered compact 1A in FIG. 2. Here, the shape of the spherical ceramic sintered compact 1A is not limited to a perfect sphere; even though no being a perfect sphere, it only has to be a solid including a curved surface and may have a slight unevenness on a surface. Moreover, the ceramic sintered compact 1 is not limited to the spherical ceramic sintered compact 1A and may be a solid with a height (for example, the rectangular ceramic sintered compact 1B in FIG. 3). Even in a case where the ceramic sintered compact 1 is a solid with a height, the composition, structure, properties, and the like thereof are similar to those in a case where it is the spherical ceramic sintered compact 1A and, accordingly, a detailed description thereof is omitted.

First, a cross section passing through a centroid, that is, a center C, of the spherical ceramic sintered compact 1A is prepared. That cross section is occasionally simply referred to as cross section. Here, the centroid C does not mean a precisely and narrowly defined one point within the spherical ceramic sintered compact 1A and only has to be a broad region in which a diameter of the cut cross section may be 80% or more of a diameter of the spherical ceramic sintered compact 1A. The center C of the spherical ceramic sintered compact 1A is a midpoint of the diameter. A radius from the midpoint is referred to as central radius. A central radius of 1 mm refers to a region that is 1 mm or less in a radial direction from the midpoint. The centroidal portion 2 refers to, within a cross section passing through the center C, a portion within a central radius of 1 mm (a portion inside a dashed circle in division (B) of FIG. 2).

The surface portion 3 refers to, within the cross section passing through the center C of the spherical ceramic sintered compact 1A, a portion on a surface side. For example, in a case where the diameter of the spherical ceramic sintered compact 1A is 10 mm or more, the surface portion 3 is defined as a portion ranging from 0.5 mm to 1.0 mm from a surface along a thickness direction (a direction orthogonal to the surface) (a portion between two circles drawn with two-dot chain lines in division (B) of FIG. 2). In contrast, in a case where the diameter of the spherical ceramic sintered compact 1A is smaller than 10 mm, the surface portion 3 is defined as the inside of a range from $0.05 \times D$ mm to $0.10$ mm $\times D$ from the surface along the thickness direction, where D denotes the diameter. That is to say, the centroidal portion 2 and the surface portion 3 do not overlap irrespective of the size of the spherical ceramic sintered compact 1A.

It should be noted that in a case where the ceramic sintered compact 1 is the rectangular ceramic sintered compact 1B as in FIG. 3, the centroidal portion 2 is, within a cross section along a height direction H and that passes through the centroid C, a portion within a radius of 1 mm or less from the centroid C of the rectangular ceramic sintered compact 1B (a portion inside a dashed circle in division (B) of FIG. 3). Moreover, in the case where the ceramic sintered compact 1 is the rectangular ceramic sintered compact 1B, the surface portion 3 is, within the cross section passing through the center C, a portion in a range from 0.5 mm to 1.0 mm from the surface along the thickness direction (the direction orthogonal to the surface) (a portion between two rectangles drawn with two-dot chain lines in division (B) of FIG. 3).

When the surface portion 3 and the centroidal portion 2 of the spherical ceramic sintered compact 1A are subjected to an XRD analysis ($2\theta$), several peaks (XRD peaks) appear. In the spherical ceramic sintered compact 1A, the detection positions of the top four peaks in a descending order of peak strength match within $\pm 0.5°$ between the surface portion 3 and the centroidal portion 2, the top four peaks being selected from peaks detected within a range of a diffraction angle from 10° to 60°.

First, description will be made on XRD analysis conditions. For the XRD analysis, a cross section passing through the center C of the spherical ceramic sintered compact 1A is defined as a measurement surface. A surface roughness Ra of the measurement surface is 1 $\mu$m or less. The XRD analysis is performed as follows: a Cu target (Cu-K$\alpha$) is used, a tube voltage is set at 40 kV, a tube current is set at 40 mA, a scan speed is set at 2.0°/min, a slit (RS) is set at 0.15 mm, and scanning range ($2\theta$) is set in a range from 10° to 60°. For the measurement, D8_ADVANCE manufactured by Bruker Corporation or equipment with a comparative performance is used.

The XRD analysis is capable of qualitative analysis or quantitative analysis according to a crystalline compound. Peaks appearing during the XRD analysis are affected by the composition, crystallinity, abundance, orientation, residual stress, and the like of the crystalline compound. One reason why peaks detected within the range of the diffraction angle from 10° to 60° are used that it is a region where typical peaks in a ceramic sintered compact are detectable.

The Powder Diffraction File (PDF) provided by the International Centre for Diffraction Data, ICDD, may be used for typical peaks. That is to say, four of the typical peaks may be selected from the PDF regarding a ceramic serving as a matrix.

For a silicon nitride sintered compact, typical peaks ($2\theta$) are set to, for example, positions around 23.4°, 27.1°, 33.6°, and 36.1°. For an $\alpha$-aluminum oxide sintered compact, typical peaks ($2\theta$) are set to, for example, positions around 25.6°, 35.2°, 43.4°, and 57.5°. For a zirconium oxide sintered compact, typical peaks ($2\theta$) are set to, for example, positions around 30.0°, 34.5°, 50.0°, and 59.0°. It should be noted that an $\alpha$-aluminum oxide sintered compact has a trigonal crystal structure. An $\alpha$-aluminum oxide sintered compact is used for a wear-resistant member such as a bearing ball.

The top four peaks in a descending order detected within the range of the diffraction angle ($2\theta$) from 10° to 60° refer to the top four peaks in a descending order of peak strength ratio of the ceramic serving as the matrix. The top four peaks in a descending order detected within the range of the diffraction angle ($2\theta$) from 10° to 60° are sometimes simply referred to as the top four peaks. The detection position of a peak refers to a diffraction angle corresponding to a peak top. It should be noted that one reason why a peak detectable within a range from 10° to 60° is taken is that it is a range where a peak in a matrix of a ceramic sintered compact is detectable.

As described above, in the spherical ceramic sintered compact 1, the detection positions of the top four peaks in the surface portion 3 and the detection positions of the top four peaks in the centroidal portion 2 match within $\pm 0.5°$. When the detection positions of the peaks match within $\pm 0.5°$, it is sometimes simply referred to as "the detection positions of the peaks match."

When the detection positions of the peaks match, it means that a difference (Dp) between a peak position of the surface portion 3 and a peak position of the centroidal portion 2 of the spherical ceramic sintered compact 1A satisfies Expression (1) below.

$$-0.5° \leq Dp \leq 0.5°...(1)$$

When the detection positions of the top four peaks in the surface portion 3 and the detection positions of the top four peaks in the centroidal portion 2 of the spherical ceramic sintered compact 1A match, it means that the composition, crystallinity, abundance, orientation, residual stress, and the like of the crystalline compound match between the surface portion 3 and the centroidal portion 2. This makes it possible to reduce variations in properties of an HIP-treated compact. An offset in the detection position between peaks exceeding $\pm 0.5°$ indicates that there is a deviation in any one or two or more of the composition, crystallinity, abundance, orientation, and residual stress of the crystalline compound. It should be noted that peaks other than the top four peaks may match or may not match. It is important that the top four typical peaks match.

Moreover, it is preferable that out of the top four peaks in the surface portion 3 and the top four peaks in the centroidal portion 2 of the spherical ceramic sintered compact 1A in a descending order of peak strength, peaks at peak detection positions within $\pm 0.5°$ have peak strengths matching within $\pm 10\%$ between the surface portion 3 and the centroidal portion 2. When the peak strengths match within $\pm 10\%$, it is sometimes simply referred to as "the peak strengths match." It means matching of not only the peak detection positions but also the peak strengths. Matching of the peak detection positions and the peak strengths leads to consistency of any one or two or more of the composition, crystallinity, abundance, orientation, and residual stress of the crystalline compound.

Matching of the peak strengths also means that a difference ratio based on a difference (Ds) between the peak strength of the surface portion 3 and the peak strength of the centroidal portion 2 of the spherical ceramic sintered compact 1A satisfies Expression (2) below.

-10% $\leq$ (Ds / the peak strength of the surface portion 3) $\times$ 100 $\leq$ 10%...(2)                    (2)

Moreover, in any cross section not passing through the center C of the spherical ceramic sintered compact 1A, it is also preferable that the detection positions of the top four peaks in the centroidal portion 2 and the detection positions of the top four peaks in the surface portion 3 in a descending order of peak strength match within $\pm0.5°$, the top four peaks being selected from peaks detected within the range of the diffraction angle from 10° to 60°.

States of the crystalline compound at the surface portion 3 and the centroidal portion 2 of the spherical ceramic sintered compact 1A should be homogenized. The HIP treatment is a type of sintering method in which a high temperature and a high pressure are to be applied. The high temperature and the high pressure are transmitted from the surface side to a center side of the spherical ceramic sintered compact 1A, which makes it difficult to homogenize the states of the crystalline compound at the surface portion 3 and the centroidal portion 2. Controlling a cooling rate after the HIP treatment as described later enables the homogenization.

Moreover, in any cross section not passing through the center C of the spherical ceramic sintered compact 1A, it is also preferable that out of the top four peaks in the surface portion 3 and the top four peaks in the centroidal portion 2 in a descending order of peak strength, peaks at peak detection positions within $\pm0.5°$ have peak strengths matching within $\pm10\%$.

Moreover, as for XRD peaks based on the grain boundary phase, it is also preferable that the top one of peaks in the surface portion 3 and the top one of peaks in the centroidal portion 2 of the spherical ceramic sintered compact 1A in a descending order, which are at peak detection positions within $\pm0.5°$, have peak strengths matching within $\pm10\%$.

A 50 $\mu$m $\times$ 50 $\mu$m observation region is set in each of the surface portion 3 and the centroidal portion 2 of the spherical ceramic sintered compact 1A and the region is photographed using an SEM (Scanning Electron Microscope). Then, it is preferable that an average major axis of the top 50 ceramic crystalline grains with the longest major axes be in a range from 0.5 $\mu$m to 20 $\mu$m on the basis of a photographed SEM image.

First, description will be made on a method of measuring ceramic crystalline grains using an SEM. A Schottky field-emission scanning electron microscope JSM-7200F manufactured by JEOL Ltd. or equipment with a comparable or higher performance is used as the SEM. Any location may be selected, as a measurement area, from the surface portion 3 and the centroidal portion 2 of the spherical ceramic sintered compact 1A. An SEM image of the 50 $\mu$m $\times$ 50 $\mu$m observation region (measurement area) is obtained at a magnification of 5000$\times$.

The longest diagonal of a ceramic crystalline grain on the SEM image is defined as the major axis. The top 50 ceramic crystalline grains with the longest major axes on the SEM image are selected and an average value of the major axes thereof is defined as an average major axis. In a case where 50 ceramic crystalline grains fail to be collected in the 50 $\mu$m $\times$ 50 $\mu$m observation region, another 50 $\mu$m $\times$ 50 $\mu$m observation region is used. Although the ceramic crystalline grains may appear to overlap each other in the SEM image, the top 50 largest ceramic crystalline grains as seen in the SEM image are basically selected.

As long as the average major axis of the ceramic crystalline grains of the spherical ceramic sintered compact 1A is in a range from 0.5 $\mu$m to 20 $\mu$m, it is possible to achieve both the homogenization and improvement in strength of the surface portion 3 and the centroidal portion 2. At an average major axis of less than 0.5 $\mu$m, the ceramic crystalline grains are extremely small and, consequently, there is a possibility that a slight segregation of the grain boundary phase impairs homogeneity between the surface portion 3 and the centroidal portion 2. At a long average major axis exceeding 20 $\mu$m, there is a possibility that gaps between the ceramic crystalline grains vary in size. Accordingly, the average major axis of the ceramic crystalline grains is preferably in a range from 0.5 $\mu$m to 20 $\mu$m, further in a range from 1 $\mu$m to 10 $\mu$m. Moreover, the top 50 largest ceramic crystalline grains are controlled, which makes it possible to improve the homogeneity.

It is preferable that the spherical ceramic sintered compact 1A contain the grain boundary phase in an amount of 1mass% to 20mass%. It is preferable the grain boundary phase contain one or two or more selected from rare-earth elements, Al, Ti, Zr, Hf, Mo, W, Co, Fe, and C. The rare-earth element(s) is/are one or two or more selected from yttrium and the lanthanoid elements.

The grain boundary phase of the spherical ceramic sintered compact 1A consists mainly of a sintering aid. The grain boundary phase serves as a component that fills a gap between ceramic crystalline grains serving as the matrix. The sintering aid is a component that improves a sintering performance to densify the spherical ceramic sintered compact 1A. The densification leads to an improvement in strength of the spherical ceramic sintered compact 1A. With a grain boundary phase in an amount of less than 1mass%, the effectiveness may be insufficient. With a grain boundary phase in an amount exceeding 20mass%, the benefits of the ceramic crystalline grains serving as the matrix may fail to be leveraged. Accordingly, the grain boundary phase is preferably in a range from 1mass% to 20mass%, further in a range from 5mass% to 17mass%. It should be noted that a method in which the mass% of the ceramic crystalline grains serving as the matrix is subtracted from 100mass% may be used as a simple method of measuring the mass% of the grain boundary phase. As long as the ceramic sintered compact has a relative density of 98% or more, such a method may be used. The mass% of the grain boundary phase may, of course, be directly measured.

The grain boundary phase of the spherical ceramic sintered compact 1A may be either an amorphous compound or a crystalline compound. It is preferable that the element(s) present in the grain boundary phase, which are selected from rare-earth elements, Al, Ti, Zr, Hf, Mo, W, Co, Fe, and C, be present as one or two or more selected from single elements, oxides, nitrides, silicides, carbides, and sulfides. The oxides, nitrides, silicides, carbides, and sulfides each contain a complex compound. Examples of the complex compound include oxynitrides.

In the spherical ceramic sintered compact 1A, homogeneity between the surface portion 3 and the centroidal portion 2 is achievable even though one of or both of an amorphous compound and a crystalline compound are present in the grain boundary phase. That is to say, it is possible to obtain homogeneity of detection positions and peak strengths between the top one peak in the surface portion 3 and the top one peak in the centroidal portion 2 in a descending order of XRD peak strength, the top one peaks being selected from peaks detected within the range of the diffraction angle from 10° to 60°. By obtaining homogeneity of XRD peaks based on the grain boundary phase, it is possible to further improve the properties.

It is preferable that the spherical ceramic sintered compact 1A be a silicon nitride sintered compact. Examples of the spherical ceramic sintered compact 1A include aluminum nitride sintered compacts, aluminum oxide sintered compacts, zirconium oxide sintered compacts, and the like in addition to silicon nitride sintered compacts. Ceramic crystalline grains serving as matrices of silicon nitride sintered compacts are silicon nitride crystalline grains. Silicon nitride sintered compacts include a sialon sintered compact. Ceramic crystalline grains serving as matrices of aluminum nitride sintered compacts are aluminum nitride crystalline grains. Ceramic crystalline grains serving as matrices of aluminum oxide sintered compacts are aluminum oxide crystalline grains. Ceramic crystalline grains serving as matrices of zirconium oxide sintered compacts are zirconium oxide crystalline grains. A matrix refers to the most abundant crystalline grains in a ceramic sintered compact. In other words, the spherical ceramic sintered compact 1A is a polycrystal.

A three-point bending strength of a silicon nitride sintered compact, which is the spherical ceramic sintered compact 1A, may be set to 600 MPa or more, further 900MPa or more. A three-point bending strength of aluminum nitride sintered compacts is in a range from 200 to 500 MPa, approximately. A three-point bending strength of aluminum oxide sintered compacts is in a range from 400 to 600 MPa, approximately. A three-point bending strength of zirconium oxide sintered compacts is in a range from 600 to 900 MPa, approximately. Silicon nitride sintered compacts are ceramic sintered compacts having a high strength. The majority of silicon nitride crystalline grains serving as the matrix of a silicon nitride sintered compact are usually elongated crystalline grains with an aspect ratio of 2 or more. A complicated interlocking of the elongated crystalline grains achieves a high strength. Contrarily, the crystalline grains are less interlocked in aluminum nitride sintered compacts, aluminum oxide sintered compacts, and zirconium oxide sintered compacts as compared with silicon nitride sintered compacts. Thus, there is a limit to an improvement in strength. In the spherical ceramic sintered compact 1A, homogenization between the surface portion 3 and the centroidal portion 2 is achievable even though the elongated silicon nitride crystalline grains are complicatedly interlocked as in silicon nitride sintered compacts. In other words, it is preferable that the spherical ceramic sintered compact 1A be a silicon nitride sintered compact.

It is preferable that the spherical ceramic sintered compact 1A be 5 mm or more in diameter. The diameter refers to the longest diameter of the spherical ceramic sintered compact 1A. In contrast, in a case where the ceramic sintered compact 1 is a solid with a height, it is preferable that the height (a length along the height direction H) be 5 mm or more. Here, the height refers to a length of the longest side of the rectangular ceramic sintered compact 1B. It should be noted that in a case where the ceramic sintered compact 1 has a height, the ceramic sintered compact 1 is not limited to a rectangular parallelepiped and may be a solid with a polygonal base, a cone, or a cylinder. The ceramic sintered compact 1 may also be a polyhedron. Further, the ceramic sintered compact 1 may be in a shape of a component such as a cam roller and a friction stir welding tool. Even though the height or the diameter of the ceramic sintered compact 1 is increased to 5 mm or more, further 9 mm or more, the homogenization between the surface portion 3 and the centroidal portion 2 is achievable.

In the spherical ceramic sintered compact 1A, a difference ratio based on a difference (Dv) between a Vickers hardness of the surface portion 3 and a Vickers hardness of the centroidal portion 2 is allowed to fall within $\pm 10\%$. A Vickers hardness is measured by a method according to the Japanese Industrial Standards (JIS R1610). When the difference ratio based on the difference (Dv) between the Vickers hardness of the surface portion 3 and the Vickers hardness of the centroidal portion 2 of the spherical ceramic sintered compact 1A falls within $\pm 10\%$, it means that Expression (3) below is satisfied. It should be noted that JIS_R1610 corresponds to ISO14705.

$$-10\% \leq (Dv \,/\, \text{the Vickers hardness of the surface portion}) \times 100 \leq 10\% ...(3) \qquad\qquad (3)$$

In the spherical ceramic sintered compact 1A, a difference ratio based on a difference (Dt) between a fracture toughness value of the surface portion 3 and a fracture toughness value of the centroidal portion 2 is also allowed to fall within $\pm 20\%$. The fracture toughness values are calculated on the basis of Shinhara's equation after a crack length is measured by the IF method specified by the Japanese Industrial Standards (JIS_R1607). A press-in load for the measurement of the fracture toughness values is 20 kgf. When the difference ratio based on the difference ($Dt$) between the fracture toughness value of the surface portion 3 and the fracture toughness value of the centroidal portion 2 of the spherical ceramic sintered compact 1A falls within $\pm 20\%$, it means that Expression (4) below is satisfied. It should be noted that JIS_R1607 corresponds to ISO15732.

$$-20\% \le (Dt \text{ / the fracture toughness value of the surface portion}) \times 100 \le 20\%...(4) \tag{4}$$

The silicon nitride sintered compact, which is the spherical ceramic sintered compact 1A, enables a Vickers hardness HV of 1460 or more. The silicon nitride sintered compact also enables a fracture toughness value of 6.0 MPa·m$^{1/2}$ or more. That is to say, the silicon nitride sintered compact enables a Vickers hardness HV of 1460 or more and then enables a difference in Vickers hardness between the surface portion 3 and the centroidal portion 2 to fall within $\pm 10\%$. A Vickers hardness HV of 1460 or more means that the Vickers hardnesses of both the surface portion 3 and the centroidal portion 2 are 1460 or more. The silicon nitride sintered compact also enables a fracture toughness value of 6.0 MPa.m$^{1/2}$ and then enables a difference in fracture toughness value between the surface portion 3 and the centroidal portion 2 to fall within $\pm 20\%$. A fracture toughness value of 6.0 MPa·m$^{1/2}$ or more means that the fracture toughness values of both the surface portion 3 and the centroidal portion 2 are 6.0 MPa·m$^{1/2}$ or more.

When Vickers hardnesses HV of ten of the spherical ceramic sintered compacts 1A are measured, the spherical ceramic sintered compacts 1A are allowed to satisfy the maximum value - the minimum value among the Vickers hardnesses HV $\le 50$. Moreover, when fracture toughness values of ten of silicon nitride sintered compacts are measured, it is possible to satisfy the maximum value - the minimum value among the fracture toughness values $\le 0.8$ MPa·m$^{1/2}$ or less.

The spherical ceramic sintered compact 1A is usable as a wear-resistant member. Examples of the wear-resistant member include a bearing ball, a roller, a check ball, a wear pad, a plunger, a rolling element, and a friction stir welding tool member. These wear-resistant members are slidable with respect to a counterpart member made of a metal material, ceramics, or the like. For an improvement in durability of a sliding surface, it is preferable that the sliding surface be polished to be a polished surface with a surface roughness (Ra) of 0.5 $\mu$m or less, further 0.1 $\mu$m or less, more preferably 0.05 $\mu$m or less.

In the spherical ceramic sintered compact 1A, a variation in hardness is reduced. Therefore, a variation in polishing efficiency is reduced, which makes it possible to obtain similar polished surfaces with the same polishing time. For example, a variation in hardness or fracture toughness value of the ceramic sintered compact may result in a variation in how it is polished during a polishing step.

An example of the wear-resistant member is a bearing ball. The spherical ceramic sintered compact 1A is exemplified by a silicon nitride sintered compact. FIG. 4 is a diagram illustrating an example of a bearing including a bearing ball. In the figure, a reference numeral 4 represents a bearing ball, a reference numeral 5 represents an inner ring, a reference numeral 6 represents an outer ring, and a reference numeral 10 represents a bearing.

The bearing ball 4 of the bearing 10 is made of the silicon nitride sintered compact, which is the spherical ceramic sintered compact 1A. The bearing 10 includes the bearing ball 4 arranged between the inner ring 5 and the outer ring 6. The bearing 10 in FIG. 4 includes 16 of the bearing balls 4. The bearing 10 is used with a plurality of bearing balls 4 arranged therein. Motors used in electric vehicles (EVs) and hybrid vehicles (HEVs) are being developed. The maximum number of revolutions of a motor for passenger cars is supposed to reach 10000 to 15000 rpm. Since an electric vehicle is configured to move from a stopped state, a rotational speed thereof varies in a range from 0 to 15000 rpm. In order to accommodate changes in rotational speed, inverter motors are being developed.

An inverter motor is a mechanism that controls a frequency of electric power supplied to an AC (alternating-current) motor to control the rotational speed of a motor. A change in rotational speed leads to a change in torque. A torque is, in mechanics, a moment of a force which acts around a fixed axis of rotation and is present around the axis of rotation. An environment where the number of revolutions changes is an environment where a torque (a stress) applied to the bearing balls changes.

In the silicon nitride sintered compact, which is the spherical ceramic sintered compact 1A, a variation in fracture toughness value is reduced. The fracture toughness value is an index indicating a resistance of a material with a crack or a crack-shaped defect to fracture under mechanical load. The fracture toughness value is a type of specific index of toughness, which means properties of endurability of the material against fracture. For example, a stress on the bearing balls 4 changes with a change of torque due to a change in rotational speed of the bearing 10. The stress changes during sliding with changes in rotational speed. In particular, an increase in rotational speed results in eccentricity. The eccentricity causes a slight change in alliance between the inner ring and the outer ring of the bearing ball, which increases aggressiveness.

This is a cause for a decrease in wear resistance and the occurrence of electrolytic corrosion. Even under such an environment, the aggressiveness of the bearing balls 4, which are manufactured from the spherical ceramic sintered compact 1A, relative to the inner ring 5 and the outer ring 6 is stabilized by virtue of a reduced variation in fracture toughness value. This makes it possible to improve the durability as the bearing 10. Consequently, not only the bearing balls but also the bearing itself can be improved in durability. In other words, the spherical ceramic sintered compact 1A is suitable for bearing balls used in a bearing for inverter motors.

It is preferable that the detection positions of the top four peaks match within ±0.5° even after the spherical ceramic sintered compact 1A is polished. For example, the bearing balls 4 are manufactured by polishing the spherical ceramic sintered compact 1A as described above. An unpolished ceramic sintered compact for bearing balls is sometimes referred to as raw sphere. A bearing ball made of a polished ceramic sintered compact is sometimes referred to as finished sphere. It is preferable to have the above-described configuration irrespective of whether the ceramic sintered compact is in the form of a raw sphere or a finished sphere. In other words, the ceramic sintered compacts according to the embodiment also include a polished ceramic sintered compact.

Next, description will be made on a method of manufacturing the ceramic sintered compact 1 using the spherical ceramic sintered compact 1A. As long as the spherical ceramic sintered compact 1A has the above-described configuration, the manufacturing method thereof is not limited; however, a method for obtaining it with a good production yield is as follows. In a case where the ceramic sintered compact 1 is a solid with a height, the manufacturing method is similar to that for the spherical ceramic sintered compact 1A.

First, a ceramic powder that serves as a matrix is prepared. The matrix is exemplified by one selected from silicon nitride, aluminum nitride, aluminum oxide, and zirconium oxide. Examples of a silicon nitride powder include a powder produced by a direct nitridation method or an imide decomposition method. The silicon nitride powder produced by the direct nitridation method is relatively inexpensive, although it contains a large amount of impurities such as Fe. The silicon nitride powder produced by the imide decomposition method is relatively expensive, although it contains a small amount of impurities such as Fe. Both of these silicon nitride powders are usable.

Subsequently, a sintering aid powder is prepared. Examples of the sintering aid powder include one or two or more compounds of rare-earth elements, Al, Ti, Zr, Hf, Mo, W, Co, Fe, and C. Examples of the compound include oxides, nitrides, silicides, carbides, sulfides, and composite compounds thereof. Examples of the composite compounds include oxynitrides. Silicon carbide (SiC) may be added as the sintering aid. When the total of the ceramic powder and the sintering aid is defined as 100mass%, it is preferable that a proportion of the sintering aid fall within a range from 1mass% to 20mass%. A mixture of the ceramic powder and the sintering aid powder is referred to as a raw mixed powder.

Subsequently, a binder and a solvent are added to the raw mixed powder, if necessary. Moreover, a crushing/disintegration step using a ball mill may be performed.

Subsequently, a molding step is performed. Examples of the molding step include die molding, CIP (cold isostatic pressing), injection molding, and a doctor blade method. Moreover, a green compact obtained by die molding may be subjected to CIP. It is possible to obtain the green compact by performing the molding step.

Subsequently, a debinding step is performed on the green compact. It is preferable that the debinding step be performed at a temperature in a range from 400 degrees C to 600 degrees C. Moreover, it is preferable that the debinding step be performed in the air or in nitrogen gas. It is possible to remove the binder and the solvent in the green compact through the debinding step. It is possible to obtain a debound green compact by performing the debinding step.

Subsequently, a sintering step is performed on the debound green compact. It is preferable that the sintering step be performed at a temperature in a range from 1500 degrees C to 2000 degrees C. The sintering step may be either atmospheric pressure sintering or pressure sintering. Examples of a sintering atmosphere include a non-oxidizing atmosphere, air, and vacuum. A non-oxidizing atmosphere is preferably a nitrogen gas atmosphere or a reducing atmosphere containing nitrogen gas. The pressure inside a furnace may be a pressurized atmosphere. A sintering time is preferably within a range from 3 hours to 12 hours. For example, for a silicon nitride sintered compact, a sintering temperature exceeding 2000 degrees C may cause silicon nitride to decompose into Si and $N_2$.

The above-described sintering step is followed by a high temperature/high pressure treatment step of performing a treatment under high temperature and high pressure. The step of performing the treatment under high temperature and high pressure refers to a step of applying a pressure of 10 MPa or more at a temperature of 1500 degrees C or more. Examples of the treatment under high temperature and high pressure include an HIP (Hot Isostatic Pressing) treatment and a GPS (Gas Pressure Sintering) treatment. It is possible to achieve densification of the spherical ceramic sintered compact 1A by performing the step of performing the treatment under high temperature and high pressure. The spherical ceramic sintered compact 1A is allowed to have a relative density of 99% or more. This makes it possible to improve the three-point bending strength, the fracture toughness value, and the Vickers hardness. As for the step of performing the treatment under high temperature and high pressure, it is preferable that a cooling rate from a heating maintained temperature to 200 degrees C fall within a range from 20 degrees C/min to 150 degrees C/min in terms of a variation in properties among the individual ceramic sintered compacts.

The heating maintained temperature is set to 1500 degrees C or more. The heating maintained temperature is also, out of temperatures of 1500 degrees C or more and maintained for 10 minutes or more, a maximum attainable temperature. An upper limit of the heating maintained temperature, which is not particularly limited, is preferably 2000 degrees C or less. It is also preferably lower than the temperature during the above-described sintering step. The heating maintained temperature during the step of performing the treatment under high temperature and high pressure is set lower than the temperature during the sintering step, which makes it possible to reduce grain growth of the ceramic crystalline grains, which is the matrix.

A pressure is 10 MPa or more during the step of performing the treatment under high temperature and high pressure. An upper limit of the pressure, which is not particularly limited, is preferably 200 MPa or less. An upper limit exceeding 200 MPa may lead to an increase in manufacturing costs. Accordingly, the pressure during the step of performing the treatment under high temperature and high pressure is preferably in a range from 10 MPa to 200 MPa, further in a range from 80 MPa to 170 MPa.

It is preferable that the cooling rate from the heating maintained temperature to 200 degrees C during the step of performing the treatment under high temperature and high pressure fall within a range from 20 degrees C/min to 100 degrees C/min in terms of a variation in properties among individual ceramic sintered compacts. This is a control of the cooling rate during a cooling step in the step of performing the treatment under high temperature and high pressure. For example, a cooling rate during a conventional HIP treatment is as slow as 5 degrees C/min or less. A cooling rate within a range from 20 degrees C/min to 100 degrees C/min corresponds to a step of rapid cooling. In the ceramic sintered compact added with a sintering aid as described above, a grain boundary phase based on the sintering aid is formed. A temperature within a range from 1000 degrees C to 1200 degrees C is a temperature for the grain boundary phase to solidify. Setting the cooling rate from the heating maintained temperature to 200 degrees C to a temperature within the range from 20 degrees C/min to 100 degrees C/min indicates rapidly cooling a temperature region for the grain boundary phase to solidify. The rapid cooling makes it possible to improve homogeneity between the surface portion 3 and the centroidal portion 2.

The step of performing the treatment under high temperature and high pressure is a step of densifying the ceramic sintered compact. Pores are closed to be filled with the grain boundary phase. The temperature region for the grain boundary phase to solidify is rapidly cooled, which makes it possible to maintain a state in which the pores are closed to be filled with the grain boundary phase. The cooling rate may be a constant rate or may be changed in the middle of the step. A value given by dividing a difference in temperature between the heating maintained temperature and 200 degrees C by the time (in minutes) required is taken as the cooling rate. At a cooling rate of less than 20 degrees C/min, a variation in properties among individual ceramic sintered compacts may increase due to an insufficient cooling effect. In contrast, at a high cooling rate exceeding 100 degrees C/min, a load on a cooling facility may increase. Accordingly, the cooling rate is preferably in a range from 20 degrees C/min to 100 degrees C/min, further in a range from 30 degrees C to 80 degrees C/min.

A cooling rate for a temperature region of less than 200 degrees C is determined as desired. This is because the grain boundary phase has already solidified at 200 degrees C and, accordingly, controlling the cooling rate is no longer effective. It is preferable that the step of performing the treatment under high temperature and high pressure be an HIP treatment. The HIP treatment enables a control of the temperature and the pressure. Moreover, a water-cooling HIP furnace enables even a control of the cooling rate.

It is possible to manufacture the spherical ceramic sintered compact 1A through the above-described steps. The spherical ceramic sintered compact 1A is polished to manufacture the bearing ball 4 during the polishing step, if necessary. For example, a finish machining for forming the bearing ball 4 achieves a surface roughness Ra of 0.1 μm or less. According to ASTM_F2094, the surface roughness Ra is specified in accordance with a grade of a bearing ball. A maximum value of Ra is 0.013 μm. Forming the spherical ceramic sintered compact 1A into the bearing ball 4 requires polishing to achieve 0.013 μm or less in Ra. Such polishing is defined as the finish machining.

(Examples)

(Examples 1 to 9, Comparative Examples 1 and 2)

A raw mixed powder was prepared by mixing a ceramic powder and a sintering aid powder shown in Table 1. Examples 1 to 4, 6, and 9 and Comparative Example 1 are intended to produce silicon nitride sintered compacts, Example 5 and Comparative Example 2 are intended to produce α-aluminum oxide sintered compacts, Example 7 is intended to produce a zirconium oxide sintered compact, and Example 8 is intended to produce an aluminum nitride sintered compact. A mixed amount is defined with the assumption that the total of the ceramic powder and the sintering aid powder is 100mass%.

[Table 1]

|  | Matrix [mixed amount wt%] | Sintering Aid [mixed amount wt%] |
|---|---|---|
| Example 1 | $Si_3N_4$ (91) | $Y_2O_3$ (5), $Al_2O_3$ (3), $TiO_2$ (1) |
| Example 2 | $Si_3N_4$ (87) | $Y_2O_3$ (5), $Al_2O_3$ (4), AlN (3), $TiO_2$ (1) |

(continued)

|  | Matrix [mixed amount wt%] | Sintering Aid [mixed amount wt%] |
|---|---|---|
| Example 3 | $Si_3N_4$ (88) | $Y_2O_3$ (4), $Al_2O_3$ (5), $Mo_2C$ (1), SiC (2) |
| Example 4 | $Si_3N_4$ (87) | $Y_2O_3$ (6) $Al_2O_3$ (4), AlN (2), $HfO_2$ (1) |
| Example 5 | $Al_2O_3$ (94) | $Y_2O_3$ (5), $TiO_2$ (1) |
| Example 6 | $Si_3N_4$ (90) | $Y_2O_3$ (5), $Al_2O_3$ (4), $WO_3$ (1) |
| Example 7 | $ZrO_2$ (80) | $Al_2O_3$ (20) |
| Example 8 | AlN (94.5) | $Y_2O_3$ (5), $Al_2O_3$ (0.5) |
| Example 9 | $Si_3N_4$ (91) | $Y_2O_3$ (5), $Al_2O_3$(3), $TiO_2$ (1) |
| Comparative Example 1 | $Si_3N_4$ (91) | $Y_2O_3$ (5), $Al_2O_3$ (3), $TiO_2$ (1) |
| Comparative Example 2 | $Al_2O_3$ (94) | $Y_2O_3$ (5), $TiO_2$ (1) |

A binder and a solvent were added to a raw mixed powder shown in Examples, and the crushing/disintegration step, the molding step, the debinding step, the sintering step, and the high temperature/high pressure treatment step were sequentially performed under the above-described conditions. Specifically, the binder and the solvent were added to the raw mixed powder and the crushing/disintegration step was performed using a ball mill. After that, a binder and the like were added and the molding step was performed. After die-pressed, the molding was subjected to a CIP treatment. A green compact was taken as a green compact for obtaining a bearing ball.

Subsequently, the debinding step was performed on the green compact. The sintering step was performed on the obtained debound green compact. The obtained sintered compact was subjected to the high temperature/high pressure treatment step (for example, an HIP treatment) to obtain the spherical ceramic sintered compact 1A. At this time, the cooling rate was controlled using a cooling mechanism provided in an HIP device. Detailed conditions for the sintering step and the HIP treatment for Examples are as shown in Table 2. An HIP treatment temperature [°C] refers to the heating maintained temperature. In Table 2, "Cooling Rate" refers to the cooling rate from the heating maintained temperature to 200 degrees C. It should be noted that while conditions for the crushing/disintegration step, the molding step, the debinding step, and the polishing step in Comparative Examples are equivalent to those in Examples 1 to 8, conditions for the sintering step and the high temperature/high pressure treatment step are shown in Table 2.

[Table 2]

|  | Sintering Step | HIP Treatment | | |
|---|---|---|---|---|
|  | Temperature [°C] | Temperature [°C] | Pressure [MPa] | Cooling Rate [°C/min] |
| Example 1 | 1800 | 1650 | 80 | 30 |
| Example 2 | 1850 | 1620 | 100 | 50 |
| Example 3 | 1770 | 1680 | 120 | 70 |
| Example 4 | 1850 | 1700 | 90 | 80 |
| Example 5 | 1650 | 1600 | 100 | 40 |
| Example 6 | 1870 | 1650 | 120 | 60 |
| Example 7 | 1520 | 1500 | 80 | 30 |
| Example 8 | 1800 | 1650 | 80 | 20 |
| Example 9 | 1800 | 1650 | 80 | 150 |
| Comparative Example 1 | 1800 | 1650 | 80 | 5 |
| Comparative Example 2 | 1650 | 1600 | 100 | 5 |

The spherical ceramic sintered compact 1A was obtained through the HIP treatment. The spherical ceramic sintered compact 1A was polished to achieve a surface roughness Ra of 0.013 $\mu$m. The bearing ball 4 made of the ceramic sintered compact was obtained by polishing. The bearing ball is in the form of a sphere. An unpolished ceramic sintered compact for bearing balls is a raw sphere and a bearing ball made of a polished ceramic sintered compact is a finished sphere. It should be noted that in manufacturing Example 9, the cooling rate was extremely increased, so that although a variation in properties among the individual spherical ceramic sintered compacts 1A was sufficiently reduced, a load on the HIP device was increased, which necessitated an inspection of a heat-insulating material and a heater.

Subsequently, in Examples, a cross section passing through the center C of the spherical ceramic sintered compact 1A and the bearing ball (finished sphere) 4 was prepared and an XRD analysis on the surface portion 3 and the centroidal portion 2 was performed. Since the diameter of the spherical ceramic sintered compact 1A and the bearing ball 4 of each of Examples 1 and 5 to 6 were less than 10 mm, the surface portion 3 was defined in a range from $0.05 \times D$ to $0.1 \times D$. Since the diameter is 10 mm or more, the surface portion 3 of each of Examples 2 to 4 is defined in a range from 0.5 mm to 1.0 mm along the thickness direction (the direction orthogonal to the surface) from the surface. In each of Examples 1 to 8, the centroidal portion is defined as a range within a central radius of 1 mm. Conditions for the XRD analysis are as described above. An examination was made, by the XRD analysis, on the top four peaks in a descending order of peak strength detected within the range of the diffraction angle ($2\theta$) from 10° to 60°. Table 3 and Table 4 show the results.

For the spherical ceramic sintered compact of Comparative Examples, the XRD analysis was likewise performed on a surface portion corresponding to the surface portion 3 and a centroidal portion corresponding to the centroidal portion 2. The centroidal portion of the spherical ceramic sintered compact of Comparative Examples, which corresponds to the centroidal portion 2, is a center-side portion within a radius of 1 mm around the centroid as the centroidal portion 2. It should be noted that since the spherical ceramic sintered compact of Comparative Examples and the bearing ball based thereon were less than 10 mm in diameter, the surface portion is defined as a range from $0.05 \times D$ to $0.1 \times D$.

[Table 3]

| | | Top Four Peaks in Surface Portion and Centroidal Portion Detected within Diffraction Angle ($2\theta$) from 10° to 60° | |
| --- | --- | --- | --- |
| Spherical Ceramic Sintered Compact (Raw Sphere) | | | |
| | Diameter [inch] | Peak Detection Positions of Surface Portion and Peak Detection Positions of Centroidal Portion Matching within $\pm 0.5°$ | Difference Ratio in Peak Strength between Peaks at Peak Detection Positions within $\pm 0.5°$ among Peaks in Surface Portion and Peaks in Centroidal Portion being Matched within $\pm 10\%$ |
| Example 1 | 3/8 | YES | YES |
| Example 2 | 1-3/16 | YES | YES |
| Example 3 | 1-3/16 | YES | YES |
| Example 4 | 1-7/8 | YES | YES |
| Example 5 | 3/8 | YES | YES |
| Example 6 | 3/8 | YES | YES |
| Example 7 | 3/8 | YES | YES |
| Example 8 | 3/8 | YES | YES |
| Example 9 | 3/8 | YES | YES |
| Comparative Example 1 | 3/8 | NO | NO |
| Comparative Example 2 | 3/8 | NO | NO |

[Table 4]

| | Diameter [inch] | Top Four Peaks in Surface Portion and Centroidal Portion Detected within Diffraction Angle (2θ) from 10° to 60° | |
|---|---|---|---|
| Bearing Ball (Finished Sphere) | | | |
| | | Peak Detection Positions of Surface Portion and Peak Detection Positions of Centroidal Portion Matching within ±0.5° | Difference Ratio in Peak Strength between Peaks at Peak Detection Positions within ±0.5° among Peaks in Surface Portion and Peaks in Centroidal Portion being Matched within ±10% |
| Example 1 | 3/8 | YES | YES |
| Example 2 | 1-3/16 | YES | YES |
| Example 3 | 1-3/16 | YES | YES |
| Example 4 | 1-7/8 | YES | YES |
| Example 5 | 3/8 | YES | YES |
| Example 6 | 3/8 | YES | YES |
| Example 7 | 3/8 | YES | YES |
| Example 8 | 3/8 | YES | YES |
| Example 9 | 3/8 | YES | YES |
| Comparative Example 1 | 3/8 | NO | NO |
| Comparative Example 2 | 3/8 | NO | NO |

3/8 inches shown in Table 3 and Table 4 is 9.525 mm in diameter. 1-3/16 inches is 30.1625 mm in diameter. 1-7/8 inches is 47.625 mm in diameter. In both the spherical ceramic sintered compact 1A and the bearing ball 4 according to Example, the detection positions of the top four peaks in the surface portion 3 in a descending order of peak strength and the detection positions of the respective top four peaks in the centroidal portion 2 in a descending order of peak strength matched within ±0.5°, the top four peaks being selected from peaks detected within the range of the diffraction angle (2θ) from 10° to 60°. Moreover, in both the spherical ceramic sintered compact 1A and the bearing ball 4 according to Examples, a difference ratio in peak strength between the peaks at peak detection positions within ±0.5° among the peaks in the surface portion 3 and the peaks in the centroidal portion 2 matched within ±10%.

It should be noted that the top four peaks in a descending order of peak strength in the silicon nitride sintered compact according to each of Examples 1, 2, 3, 4, and 6 were detected at around 23.4°, 27.1°, 33.6°, and 36.1°. The top four peaks in the α-aluminum oxide sintered compact according to Example 5 were detected at around 25.6°, 35.2°, 43.4°, and 57.5°. The top four peaks in the zirconium oxide sintered compact according to Example 7 were detected at around 30°, 34.5°, 60°, and 59°. The top four peaks in the aluminum nitride sintered compact according to Example 8 were detected at around 33.5°, 36.1°, 38.0°, and 49.9°.

In the spherical ceramic sintered compact 1A according to Example 9 and the bearing ball 4 based thereon, the detection positions of the top four peaks in a descending order of peak strength in the surface portion matched those in the centroidal portion, the top four peaks being selected from peaks detected within the range of the diffraction angle (2θ) from 10° to 60°.

In comparison, in the spherical ceramic sintered compact according to Comparative Examples and the bearing ball based thereon, one or two of the peak detection positions failed to match. The peak strengths of the peaks at the offset detection positions were outside ±10%.

As for XRD peaks based on the grain boundary phase in the spherical ceramic sintered compact 1A and those in the bearing ball 4 according to Examples, the top one of the peaks in the surface portion 3 and the top one of the peaks in the centroidal portion 2 in a descending order, which were at peak positions within ±0.5°, had peak strengths matching within ±10%. In contrast, as for XRD peaks based on the grain boundary phase in the ceramic sintered compact according to some of Comparative Examples, the top one of the peaks in the surface portion and the top one of the peaks in the centroidal portion in a descending order were at offset peak positions.

Subsequently, within each of the surface portion 3 and the centroidal portion 2 of the spherical ceramic sintered compact 1A according to Examples, a 50 μm × 50 μm observation region was observed using an SEM. In Examples, the top 50 ceramic crystalline grains with the longest major axes were extracted and an average major axis was obtained. A relative density was also obtained. The relative density is a value obtained as (the density measured by the Archimedes method / a theoretical density) × 100. Table 5 shows the results. In the spherical ceramic sintered compact according to Comparative Examples, a 50 μm × 50 μm observation region of each of the surface portion and the centroidal portion was also observed using an SEM, and an average major axis and a relative density were obtained by a similar method.

[Table 5]

| | Average Major Axis of Surface Portion [μm] | Average Major Axis of Centroidal Portion [μm] | Relative Density [%] |
|---|---|---|---|
| Example 1 | 2.6 | 2.6 | 99 or more |
| Example 2 | 3.4 | 3.3 | 99 or more |
| Example 3 | 2.5 | 2.4 | 99 or more |
| Example 4 | 3.0 | 3.0 | 99 or more |
| Example 5 | 1.5 | 1.5 | 99 or more |
| Example 6 | 3.2 | 3.1 | 99 or more |
| Example 7 | 2.0 | 2.0 | 99 or more |
| Example 8 | 1.7 | 1.7 | 99 or more |
| Example 9 | 2.7 | 2.6 | 99 or more |
| Comparative Example 1 | 2.9 | 2.5 | 99 or more |
| Comparative Example 2 | 2.8 | 2.5 | 99 or more |

As can be seen from Table 5, the relative density was in a range from 99% to 100% in any of Examples and Comparative Examples. In Examples, there was no considerable difference in average major axis of the ceramic crystalline grains between the centroidal portion 2 and the surface portion 3 of the spherical ceramic sintered compact 1A. Contrarily, in Comparative Examples, there was a slight difference in average major axis of the ceramic crystalline grains between the centroidal portion and the surface portion of the spherical ceramic sintered compact. As seen from the above, it has been found that the surface portion 3 and the centroidal portion 2 in Examples are more homogeneous. A tendency similar to that of the spherical ceramic sintered compact 1A was also seen in the bearing ball 4.

Subsequently, for each of ten of the ceramic sintered compacts 1 according to Example 1, a Vickers hardness and a fracture toughness value of the surface portion 3 were measured and a Vickers hardness and a fracture toughness value of the centroidal portion 2 were measured. On the basis of the measurement results of the ten ceramic sintered compacts according to Example 1, the minimum value and the maximum value out of the 10 Vickers hardnesses of the surface portions 3 were obtained and the minimum value and the maximum value out of the 10 Vickers hardnesses of the centroidal portions 2 were obtained as shown in Table 6. Likewise, the minimum value and the maximum value among the fracture toughness values of the surface portion 3 and the minimum value and the maximum value among the fracture toughness values of the centroidal portion 2 were obtained as shown in Table 7. It should be noted that for each of Examples 2 to 9 and Comparative Examples, the maximum value and the minimum value among the Vickers hardnesses of the surface portion (shown in Table 6), the maximum value and the minimum value among the Vickers hardnesses of the centroidal portion (shown in Table 6), the minimum value and the maximum value among the fracture toughness values of the surface portion (shown in Table 7), and the minimum value and the maximum value among the fracture toughness values of the centroidal portion (shown in Table 7) were obtained.

Moreover, a difference ratio in Vickers hardness and a difference ratio in fracture toughness value were obtained on the basis of the measurement results of the ten ceramic sintered compacts according to Example 1. A difference ratio in Table 6 corresponds to Expression (3) above. Table 6 lists, out of respective 10 difference ratios of the ten ceramic sintered compacts according to Example 1, the difference ratio having the maximum absolute value. In contrast, a difference ratio in Table 7 corresponds to Expression (4) below. Table 6 lists, out of respective 10 difference ratios of the ten ceramic sintered compacts according to Example 1, the difference ratio having the maximum absolute value. It should be noted that for each of Examples 2 to 9 and Comparative Examples, the difference ratio in Vickers hardness having the maximum absolute value was obtained (shown in Table 6) and the difference ratio in fracture toughness value having the maximum absolute value was obtained (shown in Table 7).

[Table 6]

| | Vickers Hardness HV | | | | |
| --- | --- | --- | --- | --- | --- |
| | Surface Portion | | Centroidal Portion | | Difference Ratio [%] Based on Difference Dv between Surface Portion and Centroidal Portion |
| | Max. | Min. | Max. | Min. | |
| Example 1 | 1480 | 1500 | 1480 | 1500 | 1.4 |
| Example 2 | 1520 | 1550 | 1540 | 1560 | -2.6 |
| Example 3 | 1490 | 1500 | 1500 | 1520 | -2.0 |
| Example 4 | 1480 | 1530 | 1480 | 1520 | 2.6 |
| Example 5 | 1480 | 1520 | 1500 | 1530 | -3.4 |
| Example 6 | 1500 | 1530 | 1510 | 1530 | -2.0 |
| Example 7 | 1300 | 1320 | 1300 | 1310 | 1.5 |
| Example 8 | 1040 | 1050 | 1000 | 1010 | 4.8 |
| Example 9 | 1520 | 1550 | 1520 | 1540 | 2.0 |
| Comparative Example 1 | 1460 | 1660 | 1500 | 1680 | -15.1 |
| Comparative Example 2 | 1400 | 1550 | 1380 | 1510 | 11.0 |

[Table 7]

| | Fracture Toughness Value [MPa ∎ m$^{1/2}$] | | | | |
| --- | --- | --- | --- | --- | --- |
| | Surface Portion | | Centroidal Portion | | Difference Ratio [%] Based on Difference Dt between Surface Portion and Centroidal Portion |
| | Max. | Min. | Max. | Min. | |
| Example 1 | 6.3 | 6.9 | 6.5 | 6.9 | -9.5 |
| Example 2 | 6.4 | 7.2 | 6.7 | 7.1 | -10.9 |
| Example 3 | 6.2 | 6.8 | 6.4 | 7.2 | -16.1 |
| Example 4 | 6.5 | 7.2 | 6.4 | 7.5 | -15.4 |
| Example 5 | 3.2 | 3.8 | 3.3 | 3.8 | -18.8 |
| Example 6 | 6.3 | 6.9 | 6.4 | 7.0 | -11.1 |
| Example 7 | 7.1 | 7.2 | 7.2 | 7.4 | -4.2 |
| Example 8 | 3.1 | 3.2 | 2.9 | 2.9 | 9.4 |
| Example 9 | 6.2 | 6.8 | 6.2 | 6.9 | -11.3 |
| Comparative Example 1 | 5.8 | 6.9 | 6.0 | 7.1 | 22.4 |
| Comparative Example 2 | 2.7 | 3.7 | 2.9 | 4.1 | -51.9 |

As can be seen from Table 6, in the spherical ceramic sintered compacts (that is, raw spheres) 1A according to Examples, a difference in Vickers hardness between the surface portions is at most 50 HV (Example 4) and a variation is improved as compared with a difference in Vickers hardness between the surface portions of the spherical ceramic sintered compacts according to Comparative Examples being in a range from 120 to 200 HV. In the spherical ceramic sintered compacts 1A according to Examples, a difference in Vickers hardness between the centroidal portions is at most 40 HV (Example 4) and a variation is improved as compared with a difference in Vickers hardness between the centroidal portions of the spherical ceramic sintered compacts according to Comparative Examples being in a range from 130 to 180 HV.

As can be seen from Table 7, in the spherical ceramic sintered compacts 1A according to Examples, a difference in fracture toughness value between the surface portions is at most 0.8 MPa·m$^{1/2}$ (Example 2) and a variation is improved as compared with a difference in fracture toughness value between the surface portions of the spherical ceramic sintered compacts according to Comparative Examples being in a range from 1.0 to 1.2 MPa·m$^{1/2}$. In the spherical ceramic sintered compacts 1A according to Examples, except Example 4, a difference in fracture toughness value between the centroidal portions is at most 0.8 MPa·m$^{1/2}$ (Example 3) and a variation is improved as compared with a difference in fracture toughness value between the centroidal portions of the spherical ceramic sintered compacts according to Comparative Examples being in a range from 1.0 to 1.2 MPa·m$^{1/2}$ .

In Examples, a difference ratio based on a difference (Dv) between the Vickers hardness of the surface portion 3 and the Vickers hardness of the centroidal portion 2 of each of the spherical ceramic sintered compacts 1A also satisfies Expression (3) above. Moreover, in Examples, a difference ratio based on a difference (Dt) between the fracture toughness value of the surface portion 3 and the fracture toughness value of the centroidal portion 2 of each of the spherical ceramic sintered compacts 1A also satisfies Expression (4) above. A tendency similar to that of the spherical ceramic sintered compact 1A was also seen in the bearing ball 4.

In comparison, in Comparative Examples, some of the minimum values of the fracture toughness values of both of the surface portions and the centroidal portions were small. Moreover, in Comparative Examples, variations in both Vickers hardness and fracture toughness value were large.

With use of the spherical ceramic sintered compacts 1A of Examples and the spherical ceramic sintered compacts of Comparative Examples, appearances after polishing were evaluated. For the evaluation, polishing conditions for machining each of the spherical ceramic sintered compacts using a ball polishing machine were fixed and the surface was examined for a machining defect due to polishing and a defect such as an inherent void in the sintered compact. The machining conditions are as follows: the upper platen was unpressurized (without applied pressure), the lower platen was rotated, an abrasive containing diamond with glycerin as a lubricant was supplied, and the machining was performed for 24 hours. It should be noted that conditions, such as a gap distance to the upper platen, the number of revolutions of the lower platen, a loaded amount of a material for ceramic balls, and a supply amount of the abrasive, were the same among ceramic balls of the same size. After the machining, 10000 samples were taken and subjected to visual inspection and image inspection for appearance. The sample without abnormalities, such as a void and a machining-induced scratch/-defect, was defined as a good product and a yield (%) was indicated, accordingly. Table 8 shows the results.

[Table 8]

|  | Yield after Machining [%] |
|---|---|
| Example 1 | 100 |
| Example 2 | 100 |
| Example 3 | 100 |
| Example 4 | 100 |
| Example 5 | 100 |
| Example 6 | 100 |
| Example 7 | 100 |
| Example 8 | 100 |
| Example 9 | 100 |
| Comparative Example 1 | 99.1 |
| Comparative Example 2 | 98.0 |

As can be seen from Table 8, in the bearing balls 4 of Examples, it was possible to reduce a surface defect after finish machining. This is due to a reduction in a variation between the surface portion 3 and the centroidal portion 2 of the bearing ball 4 to reduce machining variability. In comparison, some appearance defects were observed in the bearing balls of Comparative Examples.

According to at least one of the embodiments described above, it is possible to provide a ceramic sintered compact and a wear-resistant member with a reduced variation in Vickers hardness, which is a property of individual ceramic sintered compacts. Moreover, according to the embodiment, it is possible to provide a ceramic sintered compact and a wear-resistant member with a reduced variation in fracture toughness value, which is a property of individual ceramic sintered compacts except a relatively large-sized ceramic sintered compact (Example 4 with a 1-7/8-inch size).

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A ceramic sintered compact comprising:

   a surface portion that is a portion on a surface side in a cross section passing through a centroid; and
   a centroidal portion that is a portion within a radius of 1 mm centered about the centroid in the cross section, wherein
   when the surface portion and the centroidal portion are subjected to an XRD (X-Ray Diffractometers) analysis, detection positions of top four peaks in a descending order of peak strength match within ±0.5° between the surface portion and the centroidal portion, the top four peaks being detected within a range of a diffraction angle from 10° to 60°.

2. The ceramic sintered compact according to claim 1, wherein the surface portion is a portion in a range from 0.5 mm to 1.0 mm along a thickness direction from a surface.

3. The ceramic sintered compact according to claim 1 or 2, wherein out of the top four peaks in the descending order of peak strength, peaks at detection positions within ±0.5° have peak strengths matching within ±10% between the surface portion and the centroidal portion.

4. The ceramic sintered compact according to any one of claims 1 to 3, wherein an average major axis of top 50 of ceramic crystalline grains with longest major axes falls within a range from 0.5 μm to 20 μm on a basis of an SEM image, the SEM image being obtained by photographing a 50 μm × 50 μm observation region using an SEM (Scanning Electron Microscope), the observation region being set in each of the surface portion and the centroidal portion.

5. The ceramic sintered compact according to any one of claims 1 to 3, comprising a grain boundary phase in an amount of 1mass% to 20mass%

6. The ceramic sintered compact according to claim 5, wherein the grain boundary phase contains one or two or more selected from rare-earth elements, Al, Ti, Zr, Hf, Mo, W, Co, Fe, and C.

7. The ceramic sintered compact according to any one of claims 1 to 3, wherein the ceramic sintered compact is a silicon nitride sintered compact.

8. The ceramic sintered compact according to claim 6, wherein the ceramic sintered compact is a silicon nitride sintered compact.

9. The ceramic sintered compact according to claim 7, wherein the ceramic sintered compact is a solid with a height of 5 mm or more or a sphere with a diameter of 5 mm or more.

10. The ceramic sintered compact according to claim 8, wherein the ceramic sintered compact is a solid with a height of 5 mm or more or a sphere with a diameter of 5 mm or more.

11. The ceramic sintered compact according to any one of claims 1 to 3, wherein a difference ratio based on a difference in Vickers hardness between the surface portion and the centroidal portion falls within ±10%.

12. The ceramic sintered compact according to any one of claims 1 to 3, wherein a difference ratio based on a difference in fracture toughness value between the surface portion and the centroidal portion falls within ±20%.

13. A wear-resistant member comprising the ceramic sintered compact according to any one of claims 1 to 3.

14. The wear-resistant member according to claim 13, wherein the wear-resistant member is a silicon nitride sintered compact.

15. A method of manufacturing the ceramic sintered compact according to claim 1, the method comprising:
a step of performing a treatment under high temperature and high pressure in which a cooling rate from a heating maintained temperature to 200 degrees C falls within a range from 20 degrees C/min to 150 degrees C/min.

16. The method of manufacturing the ceramic sintered compact according to claim 15, wherein in the step of performing the treatment under high temperature and high pressure, the cooling rate from the heating maintained temperature to 200 degrees C falls within a range from 20 degrees C/min to 100 degrees C/min.

17. The method of manufacturing the ceramic sintered compact according to claim 16, wherein the step of performing the treatment under high temperature and high pressure includes an HIP (Hot Isostatic Pressing) treatment.

18. The method of manufacturing the ceramic sintered compact according to claim 17, wherein the heating maintained temperature is in a range from 1500 degrees C to 2000 degrees C.

19. A method of manufacturing the ceramic sintered compact according to claim 7, the method comprising:
a step of performing a treatment under high temperature and high pressure in which a cooling rate from a heating maintained temperature to 200 degrees C falls within a range from 20 degrees C/min to 100 degrees C/min.

20. The method of manufacturing the ceramic sintered compact according to claim 19, wherein the step of performing the treatment under high temperature and high pressure includes an HIP treatment.

21. The method of manufacturing the ceramic sintered compact according to claim 20, wherein the heating maintained temperature is in a range from 1500 degrees C to 2000 degrees C.

1A(1)

# FIG. 1

1A(1)

ⅡB      ⅡB

(A)

1A(1)

3

C    2

(B)

# FIG. 2

1B(1)

ⅢB

H

(A)

1B(1)

C   2

3

H

(B)

# FIG. 3

10

5

6   4

(A)

10

5

6   4

(B)

# FIG. 4

## INTERNATIONAL SEARCH REPORT

| International application No. |
|---|
| **PCT/JP2024/032006** |

**A. CLASSIFICATION OF SUBJECT MATTER**

*C04B 35/596*(2006.01)i; *C04B 35/117*(2006.01)i; *C04B 35/645*(2006.01)i; *F16C 19/52*(2006.01)i; *F16C 33/32*(2006.01)i
FI:  C04B35/596; C04B35/645 500; C04B35/117; F16C33/32; F16C19/52

According to International Patent Classification (IPC) or to both national classification and IPC

**B. FIELDS SEARCHED**

Minimum documentation searched (classification system followed by classification symbols)

C04B35/596; C04B35/117; C04B35/645; F16C19/52; F16C33/32

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 1-230478 A (NGK INSULATORS LTD.) 13 September 1989 (1989-09-13) <br> p. 1, lower right column, lines 6-8, p. 3, lower right column, lines 1-15, p. 7, upper left column, lines 1-19, table 2, example 10 | 1-21 |
| X | JP 2007-230788 A (KYOCERA CORPORATION) 13 September 2007 (2007-09-13) <br> paragraphs [0009], [0056]-[0063], [0067], tables 1-2, sample no. 4, fig. 1 | 1-14 |
| A | entire text, all drawings | 15-21 |
| X | JP 2009-221103 A (GEORGIA TECH RESEARCH CORPORATION) 01 October 2009 (2009-10-01) <br> paragraphs [0010], [0018], [0023] | 1-3, 11-13, 15-18 |
| A | entire text, all drawings | 4-10, 14, 19-21 |
| A | WO 2011/102298 A1 (KABUSHIKI KAISHA TOSHIBA) 25 August 2011 (2011-08-25) <br> entire text, all drawings | 1-21 |

☑ Further documents are listed in the continuation of Box C.    ☑ See patent family annex.

| | |
|---|---|
| \*   Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| **08 November 2024** | **19 November 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**

International application No.

**PCT/JP2024/032006**

### C. DOCUMENTS CONSIDERED TO BE RELEVANT

| Category* | Citation of document, with indication, where appropriate, of the relevant passages | Relevant to claim No. |
|---|---|---|
| A | JP 2003-146767 A (NATIONAL INSTITUTE OF ADVANCED INDUSTRIAL SCIENCE AND TECHNOLOGY) 21 May 2003 (2003-05-21) entire text, all drawings | 1-21 |
| A | JP 2000-335976 A (KYOCERA CORPORATION) 05 December 2000 (2000-12-05) entire text, all drawings | 1-21 |

Form PCT/ISA/210 (second sheet) (July 2022)

**INTERNATIONAL SEARCH REPORT**
Information on patent family members

International application No.

**PCT/JP2024/032006**

| Patent document cited in search report | | | Publication date (day/month/year) | Patent family member(s) | | | Publication date (day/month/year) |
|---|---|---|---|---|---|---|---|
| JP | 1-230478 | A | 13 September 1989 | US 5002907 A column 1, lines 10-13, column 4, lines 16-34, column 8, lines 32-58, table 2, example 8 | | | |
| JP | 2007-230788 | A | 13 September 2007 | (Family: none) | | | |
| JP | 2009-221103 | A | 01 October 2009 | US 2009/0026665 A1 paragraphs [0015], [0023], [0028] KR 10-2006-0065582 A CN 1829668 A | | | |
| WO | 2011/102298 | A1 | 25 August 2011 | US 2012/0321851 A1 entire text, all drawings CN 102762520 A | | | |
| JP | 2003-146767 | A | 21 May 2003 | US 2005/0006022 A1 entire text, all drawings KR 10-2005-0043759 A CN 1585729 A | | | |
| JP | 2000-335976 | A | 05 December 2000 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5732037 B